# EUROPEAN PATENT SPECIFICATION

(11) **EP 2 975 590 B1**
(45) Date of publication and mention of the grant of the patent: **05.12.2018**
(21) Application number: 15177071.6
(22) Date of filing: 16.07.2015
(51) Int. Cl.: G08C 17/02, H04L 12/28, D06F 39/00, F25D 29/00, F25D 17/04

(54) **SYSTEM FOR CONTROLLING HOUSEHOLD APPLIANCES AND CONTROL METHOD THEREFOR**
SYSTEM ZUR STEUERUNG VON HAUSHALTSGERÄTEN UND STEUERUNGSVERFAHREN DAFÜR
SYSTÈME DESTINÉ À COMMANDER DES APPAREILS MÉNAGERS ET PROCÉDÉ DE COMMANDE ASSOCIÉ

(30) Priority: 16.07.2014 CN 201410340609
(43) Date of publication of application: 20.01.2016
(73) Proprietor: BSH Hausgeräte GmbH, 81739 München (DE)
(72) Inventor: Schröder, Bernd, Nanjing Jiangsu 210008 (CN); Schmitt, Alexander, 83278 Traunstein (DE)

(56) References cited:
- WO-A1-2011/020478
- WO-A1-2013/042100
- CN-A- 1 888 785
- DE-A1-102012 210 844
- US-A1- 2014 022 939

## Description

### Technical field

The present invention relates to the field of household appliances, in particular to a control system for household appliances.

### Background art

As technology has developed and living standards have improved, household appliances in the home have become ever more diverse to meet different aspects of people's material needs, e.g. air conditioners, washing machines, refrigerators, vacuum cleaners and air purifiers, etc. A user meets his own needs by controlling different household appliances individually. However, unified and coordinated automatic control of these household appliances is not possible; the user is required to determine which product should be turned on and which product should be turned off, and this is inconvenient for the user. At the same time, some household appliances generate waste gas and waste material etc. during use, thereby polluting the living environment, but certain other household appliances which cleanse the living environment do not promptly begin cleansing work in response to this. DE 10 2012 210 844 A1 discloses an induction cooker. Based on the level of induction cooking, the speed of the kitchen hood is adapted.

### Content of the invention

The object of the present invention is to provide a simple, but effective system for controlling household appliances to enable coordinated control of different household appliances in order to adapt to a user's mode of living.
The object is solved by the subject-matter of the independent claims. Preferred embodiments are specified by the dependent claims.
Accordingly the present invention proposes a system for controlling household appliances, comprising at least two household appliance terminals which are connected to each other, such that they are able to exchange data. The system further comprises a linkage communication module for coordinating the at least two household appliance terminals. The linkage communication module is adapted to control according to an operating state of at least one household appliance terminal another household appliance terminal.

As an advantage of the invention, the operating state of one household appliance will control whether another associated household appliance operates as well, thereby achieving linkage control of different household appliances; therefore the entire household appliance system will be more intelligent and afford the user greater convenience, so as to better maintain the entire living environment.

As a preferred improvement of the present invention, the manner of communication between the various household appliance terminals and between each household appliance terminal and the linkage communication module may be a wired connection or a wireless communication.

As a further preferred improvement of the present invention, the wireless communication may be accomplished by using a bluetooth communication, an infrared communication or a radio frequency communication.

As a further preferred improvement of the present invention, the household appliance terminals comprise a floor cleaning device and an air quality improvement device, wherein the floor cleaning device and air quality improvement device operate in linkage in the following way: when one of the floor cleaning device and air quality improvement device operates, the other of the floor cleaning device and air quality improvement device also operates in linkage.

Initiating operation of the floor cleaning device and air quality improvement device at the same time in linkage enables the floor and air to be preferably cleaned and purified at the same time, so that the entire living environment is restored to its original clean state in a short time, so as to better maintain the comfort and hygiene of the living environment.

As a further preferred improvement of the present invention, the household appliance terminals comprise a household appliance which pollutes the living environment and a household appliance which cleans the living environment, wherein the household appliance which pollutes the living environment and household appliance which cleans the living environment operate in linkage in the following way: when the household appliance which pollutes the living environment operates, the household appliance which cleans the living environment operates in linkage.
When the household appliance which pollutes the living environment operates, the waste gas, waste material and dust etc. generated thereby is preferably promptly cleaned up or filtered by the household appliance which cleans the living environment; linkage control and coordinated operation of the household appliance which pollutes the living environment and the household appliance which cleans the living environment can better maintain the cleanliness and hygiene of the entire living environment.
As a further preferred improvement of the present invention, the household appliance which pollutes the living environment comprises a refrigerator, while the household appliance which cleans the living environment comprises an air quality improvement device, wherein the refrigerator and air quality improvement device operate in linkage in the following way: when a door of the refrigerator is opened, the air quality improvement device also operates in linkage.
As soon as the refrigerator door is opened, especially if it is opened for a slightly longer time, odourous gases caused by the storage of food inside the refrigerator will diffuse into the living environment, with gases produced by certain foods (e.g. salami, some cheeses etc.) after being stored for a long time causing particular contamination of the air quality throughout the living environment. Thus, linkage control and coordinated operation of the refrigerator and the air quality improvement device preferably enables the air quality improvement device to promptly filter and purify air, so as to better and more promptly maintain the air quality of the entire living environment.

According to the present invention, the household appliance which pollutes the living environment comprises a clothing processing device, while the household appliance which cleans the living environment comprises a floor cleaning device, wherein the clothing processing device and floor cleaning device operate in linkage in the following way: when the clothing processing device completes an operating program and a door thereof is opened, the floor cleaning device automatically approaches the clothing processing device and cleans the floor in the vicinity thereof.

When the clothing processing device preferably completes an operating program and the door thereof is opened, the user will withdraw clothing therefrom, during which process impurities, water droplets or fibers and wool etc. will drop off the processed clothing onto the floor; linkage control and coordinated operation of the clothing processing device and floor cleaning device enables the floor cleaning device to rapidly clean up contaminants from around the clothing processing device, so as to better and more promptly maintain the hygiene and comfort of the entire living environment.

According to the present invention, the household appliance which cleans the living environment also comprises an air quality improvement device, wherein the air quality improvement device and the clothing processing device operate in linkage in the following way: when the clothing processing device completes an operating program and the door thereof is opened, the air quality improvement device also operates in linkage.
When the clothing processing device is opened, gases resulting from the processing of clothing will often also arise, polluting the air throughout the living environment; therefore linkage control preferably enables the air quality improvement device to promptly purify air so as to better and more promptly maintain the air quality of the entire living environment. In one preferred embodiment the air quality improvement device is a dehumidifier.
As a further preferred improvement of the present invention, the household appliance which pollutes the living environment comprises a cooker hood or a cooker, while the household appliance which cleans the living environment comprises an air quality improvement device, wherein the cooker hood or cooker and the air quality improvement device operate in linkage in the following way: when the cooker hood or cooker operates, the air quality improvement device also operates in linkage.
When the cooker hood or cooker is operating, the user is often cooking food, and oil smoke or food smells will diffuse throughout the living environment; therefore linkage control allows the air quality improvement device to promptly begin operating to purify the air in the home, so as to better and more promptly maintain the air quality of the entire living environment.

As a further preferred improvement of the present invention, also included is an air quality detection apparatus, for sending air quality detection information to the entire system for controlling household appliances.

As a further preferred improvement of the present invention, the household appliance terminals comprise a floor cleaning device and an air quality improvement device, wherein the air quality detection apparatus operates in linkage with the floor cleaning device and the air quality improvement device in the following way: when the air quality detection apparatus detects that the air quality is relatively poor, the floor cleaning device and/or air quality improvement device operate(s) in linkage.

According to the detection information, the floor cleaning device and air quality improvement device preferably can operate simultaneously, to promptly clean and purify, and to better and more promptly maintain the hygiene of the entire living environment.

As a further preferred improvement of the present invention, also included is a displaying and prompting apparatus, for displaying detection information of the air quality detection apparatus and sending an air quality prompting signal to the user.

Thus, the user will promptly conduct a major clean-up of the environment according to prompting information, to maintain the hygiene and comfort of the entire living environment.

In a preferred embodiment at least one of the household appliance terminals, especially the air quality improvement device, comprises a plasma generator for generating a plasma field that kills bacteria and microbiologic organisms. For example, electrodes may be used to generate a high-energy plasma field. Air that passes the field will be purified because the plasma kills a large part of the bacteria and microbiologic organisms that the air comprises. The plasma generator can be used in combination with conventional filter technology. The plasma generator can also be located in a vacuum cleaner and/or a hair-dryer.

Furthermore, the present invention also proposes a control method for the system for controlling household appliances described above, the household appliances comprising at least two household appliance terminals. The linkage control may be established between the various household appliance terminals by means of a linkage communication module, and according to an operating state of one household appliance terminal another household appliance terminal is controlled to correspondingly operate in linkage. Accordingly, the at least two household appliance terminals may be coordinated, such that according to an operating state of at least one household appliance terminal another household appliance terminal is operated.
As a further preferred improvement of the present invention, the household appliance terminals comprise a floor cleaning device and an air quality improvement device, and when one of the floor cleaning device and air quality improvement device operates, the other of the floor cleaning device and air quality improvement device also operates in linkage, for the purpose of maintaining overall cleanliness within a room.
As a further preferred improvement of the present invention, the household appliance terminals comprise a household appliance which pollutes the living environment and a household appliance which cleans the living environment, and when the household appliance which pollutes the living environment operates, the household appliance which cleans the living environment operates in linkage.
As a further preferred improvement of the present invention, the household appliance which pollutes the living environment comprises a refrigerator, while the household appliance which cleans the living environment comprises an air quality improvement device, and when a door of the refrigerator is opened, the air quality improvement device also operates in linkage.
As a further preferred improvement of the present invention, the air quality improvement device only operates in linkage to clean the air when the refrigerator door has been open for a predetermined time.

According to the present invention, the household appliance which pollutes the living environment comprises a clothing processing device, while the household appliance which cleans the living environment comprises a floor cleaning device, and when the clothing processing device completes an operating program and a door thereof is opened, the floor cleaning device automatically approaches the clothing processing device and cleans the floor in the vicinity thereof.

According to the present invention, the household appliance which cleans the living environment also comprises an air quality improvement device, and when the clothing processing device completes an operating program and the door thereof is opened, the air quality improvement device also operates in linkage.
As a further preferred improvement of the present invention, the household appliance which pollutes the living environment comprises a cooker hood or a cooker, while the household appliance which cleans the living environment comprises an air quality improvement device, and when the cooker hood or cooker operates, the air quality improvement device also operates in linkage.
The invention has been described with reference to a system and a method. If not otherwise stated, the system features can be likewise applied to the method and the disclosed method steps are applicable to the system.

### Description of the accompanying drawings

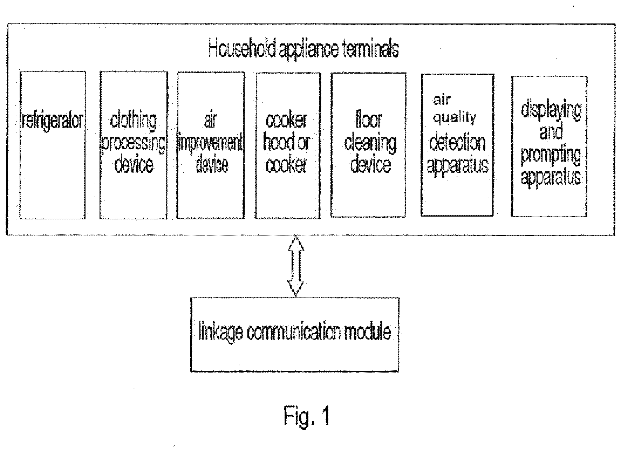

Further advantages and preferred embodiments are exemplarily illustrated in the drawings, wherein
- Fig.1: shows a schematic system diagram of an exemplary system for controlling household appliances of the present invention.

### Particular embodiments

Fig. 1 shows an exemplary system for controlling household appliances of the present invention, wherein the household appliance terminals comprise a refrigerator, a clothing processing device, a cooker hood or cooker, a floor cleaning device, an air quality improvement device, an air quality detection apparatus, and a displaying and prompting apparatus. These different household appliance terminals are connected together communicatively, and a linkage control mechanism is established by means of a linkage communication module, so that according to an operating state of one household appliance terminal, another household appliance terminal is controlled to correspondingly operate in linkage. The manner of communication between the various household appliance terminals and between each household appliance terminal and the linkage communication module is a wired connection or a wireless communication; wherein the wired communication may be a bluetooth communication, an infrared communication or a radio frequency communication, etc.

An air quality detection apparatus is used to detect in real time the air quality of the entire living environment, and to send air quality detection information to the entire system for controlling household appliances; other household appliance terminals correspondingly operate in linkage according to the quality detection information. For example, when the air quality detection apparatus detects that the air quality is relatively poor, the floor cleaning device will automatically clean the floor and suck up dust, and the air quality improvement device will filter and purify the indoor air. The floor cleaning device and air quality improvement device can operate simultaneously, to promptly clean and purify, and to better and more promptly maintain the hygiene of the entire living environment.

The floor cleaning device and air quality improvement device may also operate in linkage in the following way: when one of the floor cleaning device and air quality improvement device operates, the other of the floor cleaning device and air quality improvement device also operates in linkage. Initiating operation of the floor cleaning device and air quality improvement device at the same time in linkage enables the floor and air to be cleaned and purified at the same time, so that the entire living environment is restored to its original clean state in a short time, so as to better maintain the comfort and hygiene of the living environment.

The displaying and prompting apparatus is used for displaying detection information of the air quality detection apparatus and sending an air quality prompting signal to the user. Thus, the user will promptly conduct a major clean-up of the environment according to prompting information, to maintain the hygiene and comfort of the entire living environment.

The household appliance terminals comprise household appliances which pollute the living environment and household appliances which clean the living environment. Household appliances which are likely to pollute the living environment include the refrigerator, clothing processing device, cooker hood or cooker, etc.; household appliances which clean the living environment include the air quality improvement device or floor cleaning device, etc. A household appliance which pollutes the living environment and a household appliance which cleans the living environment operate in linkage in the following way: when the household appliance which pollutes the living environment operates, the household appliance which cleans the living environment operates in linkage. Thus, when the household appliance which pollutes the living environment operates, the waste gas, waste material and dust etc. generated thereby is promptly cleaned up or filtered by the household appliance which cleans the living environment; linkage control and coordinated operation of the household appliance which pollutes the living environment and the household appliance which cleans the living environment can better maintain the cleanliness and hygiene of the entire living environment.

For example, as soon as the refrigerator door is opened, especially if it is opened for a time which exceeds a predetermined time, odourous gases caused by the storage of food inside the refrigerator will diffuse into the living environment, with gases produced by certain foods after being stored for a long time causing particular contamination of the air quality throughout the living environment. Therefore by way of the linkage control and coordinated operation of the refrigerator and air quality improvement device, as soon as the refrigerator door is opened, the air quality improvement device immediately begins operating, to promptly filter and purify the air, so as to better and more promptly maintain the air quality of the entire living environment.

When the clothing processing device completes an operating program and the door thereof is opened, the user will withdraw clothing therefrom, during which process impurities, water droplets or fibers and wool etc. will drop off the processed clothing onto the floor; by way of linkage control and coordinated operation of the clothing processing device and floor cleaning device, once the clothing processing device has finished an operating program and the door thereof is opened, the floor cleaning device immediately begins operating, to rapidly clean up contaminants from around the clothing processing device, so as to better and more promptly maintain the hygiene and comfort of the entire living environment. At the same time, the air quality improvement device may also begin operating in linkage simultaneously. When the clothing processing device door is opened, gases produced during processing of clothing will diffuse out, polluting the air throughout the living environment; therefore linkage control enables the air quality improvement device to promptly purify air so as to better and more promptly maintain the air quality of the entire living environment.

When the cooker hood or cooker is operating, the user is often cooking food, and oil smoke or food smells will diffuse throughout the living environment; therefore linkage control allows the air quality improvement device to promptly begin operating to purify the air in the home as soon as the cooker hood or cooker operates, so as to better and more promptly maintain the air quality of the entire living environment.

The series of detailed explanations set out above are merely exemplary explanations of feasible embodiments of the present invention, and are not intended to limit the scope of protection thereof.

## Claims

1. A system for controlling household appliances, comprising at least two household appliance terminals which are connected to each other to allow for an exchange of data and a linkage communication module for coordination of the at least two household appliance terminals, wherein the linkage communication module is adapted to control according to an operating state of at least one household appliance terminal another household appliance terminal, wherein the household appliance terminals comprise a household appliance which pollutes the living environment and a household appliance which cleans the living environment, **characterized in that** the household appliance which pollutes the living environment comprises a clothing processing device, while the household appliance which cleans the living environment comprises a floor cleaning device and an air quality improvement device, wherein the floor cleaning device is configured to automatically approach the clothing processing device and clean the floor in the vicinity thereof, when the clothing processing device completes an operating program and a door thereof is opened, and wherein the system is configured to operate the air quality improvement device, when the clothing processing device completes the operating program and the door thereof is opened.

2. The system for controlling household appliances as claimed in claim 1, wherein the at least two household appliance terminals are connected to each other by wire or wirelessly and/or wherein the at least two household appliance terminals are connected to the linkage communication module by wire or wirelessly.

3. The system for controlling household appliances as claimed in claim 1 or 2, wherein a bluetooth communication, infrared communication or radio frequency communication is used to connect the at least two household appliance terminals to each other and/or to connect at least on household appliance terminal of the at least two household appliance terminals to the linkage communication module.

4. The system for controlling household appliances as claimed in one of the preceding claims 1 to 3, wherein the system is configured to operate the household appliance which cleans the living environment, when the household appliance which pollutes the living environment operates.

5. The system for controlling household appliances as claimed in claim 4, wherein the household appliance which pollutes the living environment further comprises a refrigerator, wherein the system is configured to operate the air quality improvement device, when a door of the refrigerator is opened.

6. The system for controlling household appliances as claimed in one of the claims 4 or 5, wherein the household appliance which pollutes the living environment further comprises a cooker hood or a cooker, wherein the system is configured to operate the air quality improvement device, when the cooker hood or cooker operates.

7. The system for controlling household appliances as claimed in one of the preceding claims 4 to 6, wherein the household appliance which pollutes the living environment comprise a floor cleaning device, wherein the system is configured to operate the air quality improvement device, when the floor cleaning device operates.

8. The system for controlling household appliances as claimed in one of the preceding claims 4 to 7, further comprising an air quality detection apparatus for sending air quality detection information to the air quality improvement device, wherein the air quality improvement device is configured to operate, when the air quality detection apparatus detects that the air quality is poor.

9. The system for controlling household appliances as claimed in claim 8, further comprising a displaying and prompting apparatus for displaying detection information of the air quality detection apparatus and sending an air quality prompting signal to the user.

10. The system for controlling household appliances as claimed in one of the preceding claims 4 to 9, wherein at least one of the household appliance terminals, especially the air quality improvement device, comprises a plasma generator for generating a plasma field that kills bacteria and microbiologic organisms.

11. A control method for a system for controlling household appliances according to one of the preceding claims, comprising the step of coordinating at least two household appliance terminals, such that according to an operating state of at least one household appliance terminal another household appliance terminal is operated, wherein the household appliance terminals comprise a household appliance which pollutes the living environment and a household appliance which cleans the living environment, **characterized in that** the household appliance which pollutes the living environment comprises a clothing processing device, while the household appliance which cleans the living environment comprises a floor cleaning device and an air quality improvement device, wherein the floor cleaning device automatically approaches the clothing processing device and cleans the floor in the vicinity thereof, when the clothing processing device completes an operating program and a door thereof is opened, and
the air quality improvement device operates, when the clothing processing device completes the operating program and the door thereof is opened.

12. The control method for a system for controlling household appliances as claimed in claim 11, wherein the system further comprises a refrigerator, wherein the air quality improvement device operates, when a door of the refrigerator has been open for a predetermined time.

13. The control method for a system for controlling household appliances as claimed in claim 11, wherein the system further comprises a cooker hood or a cooker, wherein the air quality improvement device operates, when the cooker hood or cooker operates.

## Patentansprüche

1. System zur Steuerung von Haushaltsgeräten, umfassend mindestens zwei Haushaltsgerät-Datenstationen, die miteinander verbunden sind, so dass sie Daten austauschen können, und ein Vernetzungskommunikationsmodul, um mindestens zwei Haushaltsgerät-Datenstationen zu koordinieren, wobei das Vernetzungskommunikationsmodul dafür eingerichtet ist, entsprechend einem Betriebszustand von mindestens einer Haushaltsgerät-Datenstation eine andere Haushaltgeräte-Datenstation zu steuern, wobei die Haushaltgeräte-Datenstationen ein Haushaltsgerät, das den Wohnbereich verunreinigt, und ein Haushaltsgerät, das den Wohnbereich reinigt, umfassen, **dadurch gekennzeichnet, dass** das Haushaltsgerät, das den Wohnbereich verunreinigt, eine Bekleidungsbearbeitungsvorrichtung umfasst, während das Haushaltsgerät, das den Wohnbereich reinigt, eine Bodenreinigungsvorrichtung und eine Luftqualitätsverbesserungsvorrichtung umfasst, wobei die Bodenreinigungsvorrichtung konfiguriert ist, um sich automatisch der Bekleidungsbearbeitungsvorrichtung zu nähern und den Boden in deren Nähe zu säubern, wenn die Bekleidungsbearbeitungsvorrichtung ein Betriebsprogramm absolviert und eine Tür hiervon geöffnet wird, und wobei das System konfiguriert ist, um die Luftqualitätsverbesserungsvorrichtung in Betrieb zu setzen, wenn die Bekleidungsbearbeitungsvorrichtung das Betriebsprogramm absolviert und die Tür hiervon geöffnet wird.

2. System zur Steuerung von Haushaltsgeräten nach Anspruch 1, wobei die mindestens zwei Haushaltsgerät-Datenstationen kabelgebunden oder drahtlos miteinander verbunden sind und/oder wobei die mindestens zwei Haushaltsgerät-Datenstationen kabelgebunden oder drahtlos mit dem Vernetzungskommunikationsmodul verbunden sind.

3. System zur Steuerung von Haushaltsgeräten nach Anspruch 1 oder 2, wobei eine Bluetooth-Kommunikation, Infrarot-Kommunikation oder Funkfrequenz-Kommunikation verwendet wird, um die mindestens zwei Haushaltsgerät-Datenstationen miteinander zu verbinden und/oder um mindestens eine Haushaltsgerät-Datenstation der mindestens zwei Haushaltsgerät-Datenstationen mit dem Vernetzungskommunikationsmodul zu verbinden.

4. System zur Steuerung von Haushaltsgeräten nach einem der vorhergehenden Ansprüche 1 bis 3, wobei das System konfiguriert ist, um das Haushaltsgerät, das den Wohnbereich reinigt, in Betrieb zu setzen, wenn das Haushaltsgerät in Betrieb ist, das den Wohnbereich verunreinigt.

5. System zur Steuerung von Haushaltsgeräten nach Anspruch 4, wobei das Haushaltsgerät, das den Wohnbereich verunreinigt, ferner einen Kühlschrank umfasst, wobei das System konfiguriert ist, um die Luftqualitätsverbesserungsvorrichtung in Betrieb zu setzen, wenn eine Tür des Kühlschranks geöffnet wird.

6. System zur Steuerung von Haushaltsgeräten nach einem der Ansprüche 4 oder 5, wobei das Haushaltsgerät, das den Wohnbereich verunreinigt, ferner eine Dunstabzugshaube oder einen Herd umfasst, wobei das System konfiguriert ist, um die Luftqualitätsverbesserungsvorrichtung in Betrieb zu setzen, wenn die Dunstabzugshaube oder der Herd in Betrieb ist.

7. System zur Steuerung von Haushaltsgeräten nach einem der vorhergehenden Ansprüche 4 bis 6, wobei das Haushaltsgerät, das den Wohnbereich verunreinigt, eine Bodenreinigungsvorrichtung umfasst, wobei das System konfiguriert ist, um die Luftqualitätsverbesserungsvorrichtung in Betrieb zu setzen, wenn die Bodenreinigungsvorrichtung in Betrieb ist.

8. System zur Steuerung von Haushaltsgeräten nach einem der vorhergehenden Ansprüche 4 bis 7, ferner umfassend ein Luftqualitätsdetektionsgerät zum Senden von Luftqualitätsdetektionsinformationen an die Luftqualitätsverbesserungsvorrichtung, wobei die Luftqualitätsverbesserungsvorrichtung konfiguriert ist, um zu arbeiten, wenn das Luftqualitätsdetektionsgerät feststellt, dass die Luftqualität schlecht ist.

9. System zur Steuerung von Haushaltsgeräten nach Anspruch 8, ferner umfassend ein Anzeige- und Aufforderungsgerät, um Detektionsinformationen des Luftqualitätsdetektionsgeräts anzuzeigen und ein Luftqualitätsaufforderungssignal an den Benutzer zu schicken.

10. System zur Steuerung von Haushaltsgeräten nach einem der vorhergehenden Ansprüche 4 bis 9, wobei mindestens eine der Haushaltsgerät-Datenstationen, insbesondere die Luftqualitätsverbesserungsvorrichtung, einen Plasmagenerator umfasst, um ein Plasmafeld zu erzeugen, das Bakterien und mikrobiologische Organismen vernichtet.

11. Steuerungsverfahren für ein System zur Steuerung von Haushaltsgeräten nach einem der vorhergehenden Ansprüche, umfassend den Schritt des Koordinierens von mindestens zwei Haushaltsgerät-Datenstationen derartig, dass entsprechend einem Betriebszustand von mindestens einer Haushaltsgerät-Datenstation eine andere Haushaltsgerät-Datenstation in Betrieb gesetzt wird, wobei die Haushaltsgerät-Datenstationen ein Haushaltsgerät, das den Wohnbereich verunreinigt, und eine Haushaltsgerät, das den Wohnbereich reinigt, umfassen, **dadurch gekennzeichnet, dass** das Haushaltsgerät, das den Wohnbereich verunreinigt, eine Bekleidungsverarbeitungsvorrichtung umfasst, während das Haushaltsgerät, das den Wohnbereich reinigt, eine Bodenreinigungsvorrichtung und eine Luftqualitätsverbesserungsvorrichtung umfasst,
wobei
sich die Bodenreinigungsvorrichtung automatisch der Bekleidungsverarbeitungsvorrichtung nähert und den Boden in deren Nähe säubert, wenn die Bekleidungsbearbeitungsvorrichtung ein Betriebsprogramm absolviert und eine Tür hiervon geöffnet wird, und
die Luftqualitätsverbesserungsvorrichtung arbeitet, wenn die Bekleidungsbearbeitungsvorrichtung das Betriebsprogramm absolviert und die Tür hiervon geöffnet wird.

12. Steuerungsverfahren für ein System zur Steuerung von Haushaltsgeräten nach Anspruch 11, wobei das System ferner einen Kühlschrank umfasst, wobei die Luftqualitätsverbesserungsvorrichtung arbeitet, wenn eine Tür des Kühlschranks eine vorgegebene Zeit lang offen war.

13. Steuerungsverfahren für ein System zur Steuerung von Haushaltsgeräten nach Anspruch 11, wobei das System ferner eine Dunstabzugshaube oder einen Herd umfasst, wobei die Luftqualitätsverbesserungsvorrichtung arbeitet, wenn die Dunstabzugshaube oder der Herd arbeitet.

## Revendications

1. Système destiné à commander des appareils ménagers, comprenant au moins deux postes d'appareils ménagers qui sont reliés l'un à l'autre pour permettre un échange de données et un module de communication de liaison pour la coordination des au moins deux postes d'appareils ménagers, dans lequel le module de communication de liaison est adapté pour commander en fonction d'un état de fonctionnement d'au moins un poste d'appareil ménager un autre poste d'appareil ménager, dans lequel les postes d'appareils ménagers comprennent un appareil ménager qui pollue l'environnement de vie et un appareil ménager qui nettoie l'environnement de vie, **caractérisé en ce que** l'appareil ménager qui pollue l'environnement de vie comprend un moyen de traitement de vêtements, tandis que l'appareil ménager qui nettoie l'environnement de vie comprend un moyen de nettoyage de sol et un moyen d'amélioration de la qualité de l'air, dans lequel le moyen de nettoyage de sol est configuré pour s'approcher automatiquement du moyen de traitement de vêtements afin de nettoyer le sol à proximité de celui-ci, lorsque le moyen de traitement de vêtements termine un programme de fonctionnement et qu'une porte de celui-ci est ouverte, et dans lequel le système est configuré pour faire fonctionner le moyen d'amélioration de la qualité de l'air, lorsque le moyen de traitement de vêtements termine le programme de fonctionnement et que la porte de celui-ci est ouverte.

2. Système destiné à commander des appareils ménagers selon la revendication 1, dans lequel les au moins deux postes d'appareils ménagers sont reliés l'un à l'autre par un fil ou sans fil et/ou dans lequel les au moins deux postes d'appareils ménagers sont reliés au module de communication de liaison par un fil ou sans fil.

3. Système destiné à commander des appareils ménagers selon la revendication 1 ou 2, dans lequel une communication Bluetooth, une communication infrarouge ou une communication radiofréquence est utilisée pour relier les au moins deux postes d'appareils ménagers les uns aux autres et/ou pour relier au moins un poste d'appareil ménager des au moins deux postes d'appareils ménagers au module de communication de liaison.

4. Système destiné à commander des appareils ménagers selon une des revendications précédentes 1 à 3, dans lequel le système est configuré pour faire fonctionner l'appareil ménager qui nettoie l'environnement de vie, lorsque l'appareil ménager qui pollue l'environnement de vie fonctionne.

5. Système destiné à commander des appareils ménagers selon la revendication 4, dans lequel l'appareil ménager qui pollue l'environnement de vie comprend en outre un réfrigérateur, dans lequel le système est configuré pour faire fonctionner le moyen d'amélioration de la qualité de l'air, lorsqu'une porte du réfrigérateur est ouverte.

6. Système destiné à commander des appareils ménagers selon une des revendications 4 ou 5, dans lequel l'appareil ménager qui pollue l'environnement de vie comprend en outre une hotte de cuisinière ou une cuisinière, dans lequel le système est configuré pour faire fonctionner le moyen d'amélioration de qualité de l'air, lorsque la hotte de cuisinière ou la cuisinière fonctionne.

7. Système destiné à commander des appareils ménagers selon une des revendications précédentes 4 à 6, dans lequel l'appareil ménager qui pollue l'environnement de vie comprend un moyen de nettoyage de sol, dans lequel le système est configuré pour faire fonctionner le moyen d'amélioration de qualité de l'air, lorsque le moyen de nettoyage de sol fonctionne.

8. Système destiné à commander des appareils ménagers selon une des revendications précédentes 4 à 7, comprenant en outre un appareil de détection de qualité de l'air pour envoyer des informations de détection de qualité de l'air vers le moyen d'amélioration de la qualité de l'air, dans lequel le moyen d'amélioration de la qualité de l'air est configuré pour fonctionner, lorsque l'appareil de détection de qualité de l'air détecte que la qualité de l'air est pauvre.

9. Système destiné à commander des appareils ménagers selon la revendication 8, comprenant en outre un appareil d'affichage et de guidage pour afficher des informations de détection de l'appareil de détection de qualité de l'air et envoyer un signal de guidage de qualité de l'air à l'utilisateur.

10. Système destiné à commander des appareils ménagers selon une des revendications précédentes 4 à 9, dans lequel au moins un des postes d'appareils ménagers, en particulier le moyen d'amélioration de la qualité de l'air, comprend un générateur de plasma pour générer un champ de plasma qui tue des bactéries et des organismes microbiologiques.

11. Procédé de commande pour un système destiné à commander des appareils ménagers selon une des revendications précédentes, comprenant l'étape consistant à coordonner au moins deux postes d'appareils ménagers de telle sorte que, en fonction d'un état de fonctionnement d'au moins un poste d'appareil ménager un autre poste d'appareil ménager est mis en fonctionnement,
dans lequel les postes d'appareils ménagers comprennent un appareil ménager qui pollue l'environnement de vie et un appareil ménager qui nettoie l'environnement de vie,
**caractérisé en ce que**
l'appareil ménager qui pollue l'environnement de vie comprend un moyen de traitement de vêtements, tandis que l'appareil ménager qui nettoie l'environnement de vie comprend un moyen de nettoyage de sol et un moyen d'amélioration de la qualité de l'air,
dans lequel
le moyen de nettoyage de sol s'approche automatiquement du moyen de traitement de vêtements et nettoie le sol à proximité de celui-ci, lorsque le moyen de traitement de vêtements termine un programme de fonctionnement et qu'une porte de celui-ci est ouverte, et
le moyen d'amélioration de la qualité de l'air fonctionne lorsque le moyen de traitement de vêtements termine le programme de fonctionnement et que la porte de celui-ci est ouverte.

12. Procédé de commande pour un système destiné à commander des appareils ménagers selon la revendication 11, dans lequel le système comprend en outre un réfrigérateur, dans lequel le moyen d'amélioration de la qualité de l'air fonctionne, lorsqu'une porte du réfrigérateur est ouverte depuis une durée prédéterminée.

13. Procédé de commande pour un système destiné à commander des appareils ménagers selon la revendication 11, dans lequel le système comprend en outre une hotte de cuisinière ou une cuisinière, dans lequel le moyen d'amélioration de la qualité de l'air fonctionne lorsque la hotte de cuisinière ou la cuisinière fonctionne.
